# EUROPEAN PATENT APPLICATION

(11) **EP 3 553 644 A1**
(43) Date of publication of application: **16.10.2019**
(21) Application number: 19168954.6
(22) Date of filing: 12.04.2019
(51) Int. Cl.: G06F 3/0488, G06F 3/01

(54) **SYSTEMS AND METHODS FOR ASSISTING USER INTERACTIONS WITH DISPLAYS**

(30) Priority: 12.04.2018 US 201815951661; 27.09.2018 US 201816144029
(71) Applicant: Capital One Services, LLC, McLean, VA 22102 (US)
(72) Inventor: KOEPPEL, Adam R., Washington, DC 20010 (US); LOCKE, Tyler, Washington, DC 20002 (US); ZARAKAS, James, McLean, VA 22102 (US); WURMFELD, David Kelly, Fairfax, VA 22030 (US)
(74) Representative: Finnegan Europe LLP

(57) **Abstract**

User interface systems and methods for assisting user interactions with displays are disclosed. A user interface system may include a display and a sensor configured to detect an interaction, by a user, with the display. The user interface system may also include one or more memory devices storing instructions and one or more processors configured to execute the instructions. The instructions may instruct the user interface system to generate a pattern on the display, determine that the interaction is a command to initiate a process to assist the user in interacting with the display, generate a display element on the pattern at a location specified by the command, and provide a feedback signal to the user indicating the display element location.

## Description

### TECHNICAL FIELD

The present disclosure generally relates to display systems and methods, and more particularly, to systems and methods for assisting user interactions with displays.

### BACKGROUND

A touch-sensitive display/screen is an electronic visual display that can detect the presence and location of a touch (e.g., with a finger, a stylus or the like) within a display area. Touch-sensitive displays are able to interact with users by responding to touch events and/or motion events.

Touch-sensitive displays are commonly used in devices such as information kiosks, automated teller machines (ATMs), airline terminals, customer self-service stations, and the like. Touch-sensitive displays are also commonly used in consumer devices such as mobile phones, desktop computers, laptop computers, portable consumer devices, and the like. While touch-sensitive displays can provide certain advantages, they also present some barriers. For example, people with physical disabilities and people who are visually impaired (e.g., with low vision and blindness) may find touch-sensitive displays difficult to operate. Therefore, it is desirable to provide systems and methods for assisting user interactions with touch-sensitive displays without the aforementioned shortcomings.

### BRIEF SUMMARY

The disclosed embodiments include systems and methods for assisting user interactions with displays.

In one embodiment, a user interface system is disclosed. The user interface system may include a display and a sensor configured to detect an interaction, by a user, with the display. The user interface system may also include one or more memory devices storing instructions and one or more processors configured to execute the instructions. The instructions may instruct the user interface system to generate a pattern on the display, determine that the interaction is a command to initiate a process to assist the user in interacting with the display, generate a display element on the pattern at a location specified by the command, and provide a feedback signal to the user indicating the display element location.

In another embodiment, an apparatus is disclosed. The apparatus may include a display and a sensor configured to detect an interaction, by a user, with the display. The apparatus may also include one or more memory devices storing instructions and one or more processors configured to execute the instructions. The instructions may instruct the apparatus to generate a pattern on the display, determine that the interaction is a command to initiate a process to assist the user in interacting with the display, and generate a display element on the pattern at a location specified by the command. The apparatus may further include a feedback provider configured to provide a feedback signal to the user indicating the display element location.

In another embodiment, a method for providing user interface is disclosed. The method may include generating a pattern on a display and detecting an interaction, by a user, with the display. The method may also include determining that the interaction is a command to initiate a process to assist the user in interacting with the display and generating a display element on the pattern at a location specified by the command. The method may further include providing a feedback signal to the user indicating the display element location.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate exemplary disclosed embodiments and, together with the description, serve to explain the disclosed embodiments. In the drawings:
Fig. 1 is a schematic diagram illustrating an exemplary user interface system, consistent with disclosed embodiments.
Fig. 2 is an illustration of an exemplary display, consistent with disclosed embodiments.
Fig. 3 is a flow diagram of an exemplary method, consistent with disclosed embodiments.

### DETAILED DESCRIPTION

Reference will now be made to exemplary embodiments, examples of which are illustrated in the accompanying drawings and disclosed herein. Wherever convenient, the same reference numbers will be used throughout the drawings to refer to the same or like parts.

The disclosed embodiments are directed to systems and methods for assisting user interactions with displays. In particular, a system may include a display and a sensor configured to detect user interactions (e.g., touches, motions, or gestures) with the display. The system may also determine whether a user interaction constitutes a command to initiate a process to assist the user in interacting with the display. Such a process may be referred to as an assistance process. If the assistance process is initiated, the system may position a display element at a location specified by the command. For instance, in some embodiments, a user may issue the command to initiate the assistance process by touching anywhere on the display and holding the touch for a period of time (e.g., one or two seconds). Once the command to initiate the assistance process is received, the system may position a display element (e.g., a home key, or the "5" key of a numeric keypad) according to the location specified by the command (e.g., the location of the touch). In this manner, the system may allow the user to indicate where the display element should be positioned so that the user may locate the display element without having to look for it. Moreover, in some embodiments, the system may utilize feedback signals (e.g., haptic feedbacks) to provide further assistance to the user.

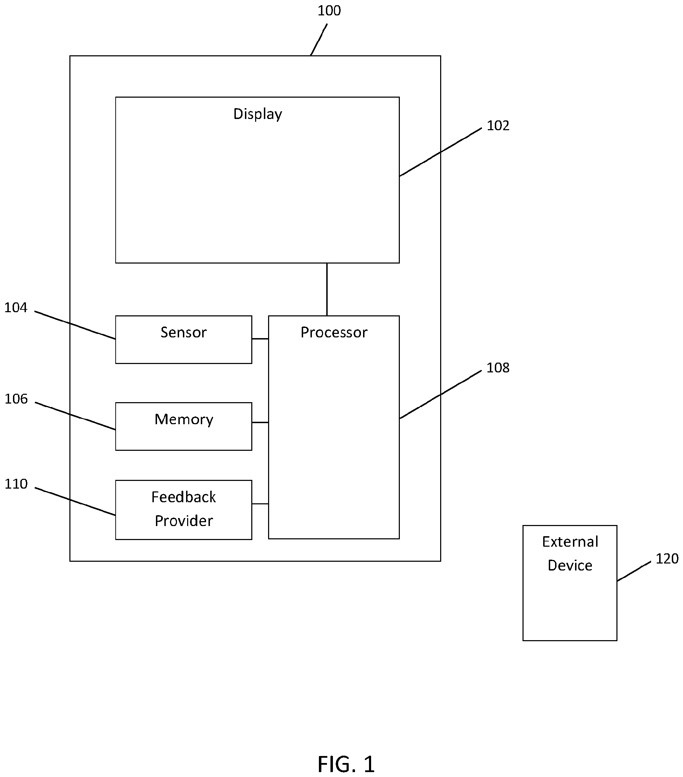

Fig. 1 is a schematic diagram illustrating an exemplary user interface system 100, consistent with disclosed embodiments. It is contemplated that system 100 may be utilized to implement information kiosks, automated teller machines (ATMs), airline terminals, customer self-service stations, mobile phones, desktop computers, laptop computers, portable consumer devices, or the like, without departing from the scope of the present disclosure.

Referring to Fig. 1, system 100 may include a display 102 and a sensor 104 configured to detect user interactions with display 102. In some embodiments, sensor 104 may be implemented as an embedded or integrated component of display 102. For instance, display 102 may be implemented as a touch-sensitive display 102 with capacitive or resistive sensors 104. Alternatively or additionally, sensor 104 may be implemented as a separate component working in conjunction with display 102. For instance, one or more motion sensors, time-of-flight sensors, infrared sensors, surface acoustic wave sensors, image sensors, as well as other types of sensors may be utilized to help detect user interactions with display 102. It is contemplated that in some instances, sensor 104 may be configured to detect user interactions (e.g., hand gestures or the like) without requiring the user to physically touch display 102.

System 100 may also include one or more dedicated processing units, application-specific integrated circuits (ASICs), field-programmable gate arrays (FPGAs), or various other types of processors or processing units 108 coupled with one or more non-transitory processor-readable memories 106 configured for storing processor-executable code. When the processor-executable code is executed by processor 108, processor 108 may perform operations to react to user interactions. For instance, in some embodiments, processor 108 may determine whether one of the user interactions constitutes a command to initiate an assistance process. Processor 108 may then carry out the assistance process to assist the user in interacting with display 102.

In some embodiments, processor 108 may determine whether a user (through his or her interactions with display 102) has issued a command to initiate the assistance process based on information provided by sensor 104. For example, if sensor 104 detects that the user has touched display 102 and held the touch for longer than a threshold period of time (e.g., one or two seconds), processor 108 may determine that the user has issued the command to initiate the assistance process. In another example, if sensor 104 detects that the user has touched display 102 and exerted pressure greater than a threshold level (e.g., a forced touch), processor 108 may determine that the user has issued the command. In yet another example, if sensor 104 detects that the user has made a particular gesture (e.g., pointing display 102 with an index finger), processor 108 may determine that the user has issued the command. In still another example, if sensor 104 detects that the user has provided a voice command (e.g., user requesting "touch assistance on"), processor 108 may recognize the voice command as a command to initiate the assistance process. It is to be understood that the examples describe above are merely exemplary and are not meant to be limiting. It is contemplated that sensor 104 may detect other types of user interactions, and that processor 108 may recognize other types of user interactions as having issued the command to initiate the assistance process without departing from the scope of the present disclosure.

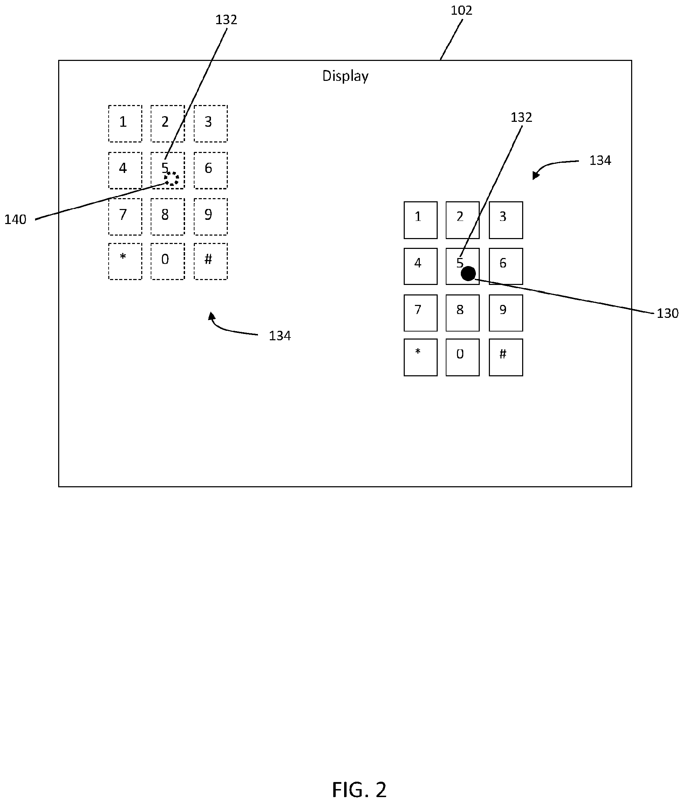

Once the command to initiate the assistance process is received, processor 108 may respond to the command by positioning a display element on display 102 according to a location specified by the command. For example, as shown in Fig. 2, if the user issued the command by touching the display at location 130 and holding the touch for a period of time, processor 108 may respond to the command by generating a display element 132 (e.g., the "5" key of a virtual keyboard) and, more generally, a pattern 134, at location 130. Similarly, if the user issued the command by touching and holding at location 140 of display 102, processor 108 may respond to the command by positioning display element 132 (or pattern 134) at location 140. In this manner, the user may utilize the assistance process to indicate where display element 132 (or pattern 134) should be positioned. The user can therefore locate display element 132 (or pattern 134) without having to look for it.

For illustrative purposes, pattern 134 is depicted as a virtual numeric keypad and display element 132 is depicted as a home key (or the "5" key) of the virtual numeric keypad in Fig. 2. Also for illustrative purposes, additional keys forming a typical numeric keypad are depicted in Fig. 2. It is to be understood that such a depiction is exemplary and is not meant to be limiting. It is contemplated that display element 132 may also be configured to include a home key (e.g., the "F" or "J" key) of a virtual keyboard pattern, a "start" or a "home" button, a "help" button, or other types of display elements that may be frequently used or may be helpful to the user.

It is contemplated that processor 108 may respond to the assistance process initiated through other types of commands in similar manners. For example, if processor 108 is configured to recognize a forced touch as having issued a command to initiate the assistance process, processor 108 may respond to the command by positioning display element 132 according to the location of the forced touch. In another example, if processor 108 is configured to recognize a particular gesture (e.g., pointing display 102 with an index finger) as having issued a command to initiate the assistance process, processor 108 may respond to the command by positioning display element 132 according to the location to which the index finger is pointed. It is to be understood that the examples describe above are merely exemplary and are not meant to be limiting. It is contemplated that processor 108 may recognize other types of user interactions as having issued commands to initiate the assistance process and that processor 108 may respond to such commands in manners similar to that described above without departing from the scope of the present disclosure.

It is contemplated that processor 108 may also be configured to provide feedback signals (e.g., haptic feedbacks) to users. In some embodiments, as shown in Fig. 1, system 100 may include a feedback provider 110. In some embodiments, feedback provider 110 may include one or more haptic motors (e.g., piezoelectric haptic motors, mechanical haptic motors, electrical haptic motors, or the like) positioned around or behind display 102.

Processor 108 may enable feedback provider 110 and provide feedback signals to a user to indicate the location of display element 132. For example, if the user issued the command to initiate the assistance process by touching display 102 at location 130 and holding the touch for a period of time, processor 108 may respond to the command by positioning display element 132 according to location 130 and notifying the user using feedback provider 110 when display element 132 is positioned at location 130. In some embodiments, processor 108 may continue to enable feedback provider 110 if the user continues to interact with display 102. In some embodiments, processor 108 may also engage feedback provider 110 to provide feedback signals with different characteristics (e.g., different vibration frequencies, intensities, or durations) to indicate different user interactions. For example, processor 108 may enable feedback provider 110 to provide a first feedback signal that indicates user interaction with display element 132 (e.g., the "5" key shown in Fig. 2) and a second feedback signal that indicates user interaction with elements other than display element 132 (e.g., another key on the virtual keypad pattern 134).

It is contemplated that, in some embodiments, feedback provider 110 may be configured to provide localized haptic feedback signals. For example, feedback provider 110 may include haptic motors positioned in a grid across the back of display 102, allowing feedback provider 110 to utilize a subset of haptic motors (or a particular haptic motor) positioned in the grid to provide localized feedback based on the location of the touch.

It is also contemplated that processor 108 may be configured to provide other types of feedback signals in addition to (or instead of) haptic feedbacks described above. For example, in some embodiments, feedback provider 110 may include a tone generator or a speaker configured to provide audible feedbacks to the user. In some embodiments, processor 108 may enable feedback provider 110 to provide audible feedback signals with different characteristics (e.g., different frequencies, intensities, or tones) to indicate different user interactions. In another example, processor 108 may utilize display 102 as a visual feedback provider. For instance, in some embodiments, processor 108 may be configured to invert or change the color setting, increase or decrease the font size, increase or decrease the brightness, increase or decrease the contrast, or change other settings of display 102 in response to a command to initiate the assistance process.

As will be appreciated from the above, system 100 configured in accordance with the present disclosure may allow users to indicate where display elements should be positioned so that the users may locate the display elements without having visual contact with the display elements. Moreover, system 100 configured in accordance with the present disclosure may provide feedback signals (e.g., haptic feedbacks, audible feedbacks, or visual feedbacks) to further assist the users. It is contemplated that system 100 configured in accordance with the present disclosure can provide a user interface that is user-friendly to people with physical disabilities and people who are visually impaired (e.g., with low vision and blindness). The user interface provided in this manner is also user-friendly to users wearing gloves or users with peripheral sensory challenges (e.g., peripheral neuropathy).

It is contemplated that system 100 may be configured to disengage the assistance process after a period of inaction (e.g., one or two minutes) or upon receiving a disengagement command. The ability to disengage the assistance process may allow system 100 to support other conventional touch functions. The disengagement command may be issued by a user by, for example, pressing a particular display element (e.g., an "EXIT" button) on display 102, or by pressing a particular hardware element (e.g., a switch or a button) provided by system 100. The disengagement command may also be issued as a gesture command or a voice command without departing from the scope of the present disclosure. In some embodiments, system 100 may be configured to operate with the assistance process disengaged as its default mode of operation.

It is further contemplated that, in some embodiments, processor 108 may be configured to instruct an external device 120 to provide feedback signals to users. For example, suppose that system 100 is an automated teller machine (ATM), and further suppose that the user of system 100 carries an external device 120 (e.g., a mobile phone). System 100 may be equipped with a communication device that is able to communicate with external device 120 so that processor 108 may instruct external device 120 to provide feedback signals, such as haptic feedback signals (e.g., vibrate) or audible feedback signals (e.g., generate a tone), to the user as the user interacts with display 102 of system 100.

It is contemplated that system 100 may be equipped with communication devices implementing technologies including, but not limited to, near field communication (NFC), wireless local area networking (WiFi), Bluetooth, Bluetooth Low Energy (BLE), Zigbee, and the like. Alternatively or additionally, system 100 may be equipped with communication devices that are able to communicate with a server via a network (e.g., Internet, a private data network, virtual private network using a public network, public switched telephone network, wireless network, and/or other suitable networks), wherein the server may be able to communicate with an application running on external device 120. It is to be understood that specific technologies utilized to facilitate communications between system 100 and external device 120 may vary without departing from the scope of the present disclosure.

It is to be understood that the reference to an ATM in the example above is merely exemplary and is not meant to be limiting. It is contemplated that system 100 may be implemented as an information kiosk, an airline terminal, a customer self-service station, a mobile phone, a desktop computer, a laptop computer, a portable consumer device, or the like, without departing from the scope of the present disclosure.

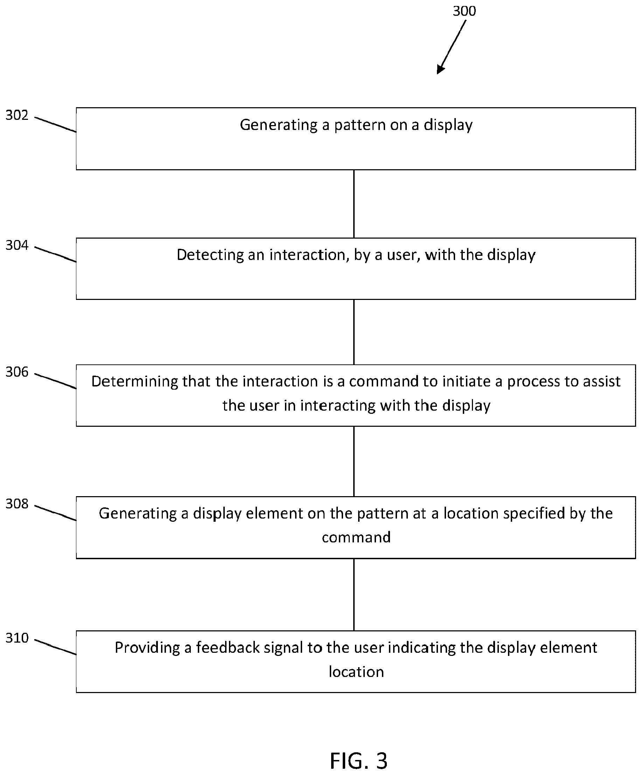

Referring now to Fig. 3, a flow diagram illustrating an exemplary method 300 for assisting user in interacting with a display consistent with the disclosed embodiments is shown. While method 300 is described herein as a sequence of steps, it is to be understood that the order of the steps may vary in other implementations. In particular, steps may be performed in any order, or in parallel. It is to be understood that steps of method 300 may be performed by one or more processors, computers, servers, controllers or the like.

In some embodiments, method 300 may be performed by system 100 (as depicted in Fig. 1). At step 302, method 300 may include generating a pattern on a display (e.g., display 102 in Fig. 1). The pattern may include an arrangement of one or more display elements, which may include an arrangement forming a virtual numeric keypad, a virtual keyboard, and the like.

At step 304, method 300 may include detecting an interaction, by a user, with the display. The user interaction may include touching the display, pressing the display with force, making gestures, issuing a voice command, and the like.

At step 306, method 300 may include determining that the interaction is a command to initiate an assistance process (e.g., a process to assist the user in interacting with the display). Method 300 may make the determination based on established rules. For example, if the interaction includes a touch that persisted for longer than a threshold period of time, method 300 may determine that the interaction constitutes a command to initiate the assistance process. In another example, if the interaction includes a forced touch (e.g. a finger press of greater than a predetermined pressure), method 300 may determine that the interaction constitutes a command to initiate the assistance process. In yet another example, if the interaction includes a particular gesture, method 300 may determine that the interaction constitutes a command to initiate the assistance process. It is to be understood that the examples describe above are merely exemplary and are not meant to be limiting. It is contemplated that method 300 may recognize other types of interactions as commands to initiate the assistance process without departing from the scope of the present disclosure.

At step 308, method 300 may include generating a display element on the pattern at a location specified by the command. For example, if the user issued the command to initiate the assistance process using a touch, method 300 may position the display element at the location of the touch. In another example, if the user issued the command to initiate the assistance process using a gesture, method 300 may position the display element at the location pointed to by the gesture. It is to be understood that the examples describe above are merely exemplary and are not meant to be limiting. It is contemplated that method 300 may recognize the location indicated by the user interaction in other manners without departing from the scope of the present disclosure.

At step 310, method 300 may include providing a feedback signal to the user indicating the display element location. The feedback signal may include haptic feedback, audible feedback, visual feedback, or other types of feedback, as described above. The feedback signal may also be provided using a device external to the display (e.g., external device 120 in Fig. 1). It is contemplated that method 300 configured in accordance with the present disclosure may provide user interactions that are user-friendly to people with physical disabilities and people who are visually impaired (e.g., with low vision and blindness). User interactions provided in this manner may also be user-friendly to users wearing gloves or users with peripheral sensory challenges (e.g., peripheral neuropathy).

In some examples, some or all of the logic for the above-described techniques may be implemented as a computer program or application or as a plug-in module or subcomponent of another application. The described techniques may be varied and are not limited to the examples or descriptions provided.

Moreover, while illustrative embodiments have been described herein, the scope thereof includes any and all embodiments having equivalent elements, modifications, omissions, combinations (e.g., of aspects across various embodiments), adaptations and/or alterations as would be appreciated by those in the art based on the present disclosure. For example, the number and orientation of components shown in the exemplary systems may be modified. Further, with respect to the exemplary methods illustrated in the attached drawings, the order and sequence of steps may be modified, and steps may be added or deleted.

Thus, the foregoing description has been presented for purposes of illustration only. It is not exhaustive and is not limiting to the precise forms or embodiments disclosed. Modifications and adaptations will be apparent to those skilled in the art from consideration of the specification and practice of the disclosed embodiments.

The claims are to be interpreted broadly based on the language employed in the claims and not limited to examples described in the present specification, which examples are to be construed as non-exclusive. Further, the steps of the disclosed methods may be modified in any manner, including by reordering steps and/or inserting or deleting steps.

Furthermore, although aspects of the disclosed embodiments are described as being associated with data stored in memory and other tangible computer-readable storage mediums, one skilled in the art will appreciate that these aspects may also be stored on and executed from many types of tangible computer-readable media, such as secondary storage devices, like hard disks, floppy disks, or CD-ROM, or other forms of RAM or ROM. Accordingly, the disclosed embodiments are not limited to the above described examples, but instead is defined by the appended claims in light of their full scope of equivalents.

Further features of embodiments are set out in the below numbered clauses.
1. A user interface system, comprising:
   a display;
   a sensor configured to detect an interaction, by a user, with the display;
   one or more memory devices storing instructions; and
   one or more processors configured to execute the instructions to perform operations comprising:
      generating a pattern on the display
      determining that the interaction is a command to initiate a process to assist the user in interacting with the display;
      generating a display element on the pattern at a location specified by the command; and
      providing a feedback signal to the user indicating the display element location.
2. The system of clause 1, wherein:
   the interaction comprises a touch of the display; and
   the operations comprise initiating the process to assist the user when the touch persists for longer than a threshold period of time.
3. The system of any preceding clause, wherein:
   the pattern comprises a virtual keyboard pattern; and
   the display element is a home key of the virtual keyboard pattern.
4. The system of clause 3, wherein:
   the virtual keyboard pattern comprises a numeric keypad; and
   the display element is a "5" key of the numeric keypad.
5. The system of any preceding clause, wherein the feedback signal comprises a haptic feedback.
6. The system of any one of clauses 1 to 4, wherein the feedback signal comprises an audible feedback.
7. The system of any one of clauses 1 to 4, wherein the feedback signal comprises a visual feedback.
8. The system of any preceding clause, wherein the operations comprise commanding an external device to generate the feedback signal.
9. The system of any preceding clause, wherein:
   the display element comprises a home key of a virtual keyboard pattern;
   providing the feedback signal comprises providing a first feedback signal indicating a user interaction with the home key; and
   the operations further comprise providing a second feedback signal indicating a user interaction with a key of the virtual keyboard pattern other than the home key.
10. The system of clause 9, wherein the first and second feedback signals are haptic feedbacks having different haptic characteristics.
11. The system of clause 9, wherein the first and second feedback signals are audible feedbacks having different audible characteristics.
12. An apparatus, comprising:
   a display;
   a sensor configured to detect an interaction, by a user, with the display;
   one or more memory devices storing instructions; and
   one or more processors configured to execute the instructions to perform operations comprising:
      generating a pattern on the display;
      determining that the interaction is a command to initiate a process to assist the user in interacting with the display; and
      generating a display element on the pattern at a location specified by the command; and
   a feedback provider configured to provide a feedback signal to the user indicating the display element location.
13. The apparatus of clause 12, wherein:
   the interaction comprises a touch of the display; and
   the operations comprise initiating the process to assist the user when the touch persists for longer than a threshold period of time.
14. The apparatus of clause 12 or 13, wherein:
   the pattern comprises a virtual keyboard pattern; and
   the display element is a home key of the virtual keyboard pattern.
15. The apparatus of any one of clauses 12 to 14, wherein feedback provider is configured to provide at least one of a haptic feedback, an audible feedback, or a visual feedback.
16. The apparatus of any one of clauses 12 to 15, wherein:
   the display element comprises a home key of a virtual keyboard pattern;
   the feedback provider is configured to provide a first feedback signal indicating a user interaction with the home key; and
   the feedback provider is further configured to provide a second feedback signal indicating a user interaction with a key of the virtual keyboard pattern other than the home key.
17. A method for providing user interface, comprising:
   generating a pattern on a display;
   detecting an interaction, by a user, with the display;
   determining that the interaction is a command to initiate a process to assist the user in interacting with the display;
   generating a display element on the pattern at a location specified by the command; and
   providing a feedback signal to the user indicating the display element location.
18. The method of clause 17, wherein:
   the pattern comprises a virtual keyboard pattern; and
   the display element comprises a home key of the virtual keyboard pattern.
19. The method of clause 17 or 18, wherein:
   the display element comprises a home key of a virtual keyboard pattern; and
   providing the feedback signal comprises:
      providing a first feedback signal indicating a user interaction with the home key; and
      providing a second feedback signal indicating a user interaction with a key of the virtual keyboard pattern other than the home key.
20. The method of any one of clauses 17 to 19, wherein the feedback signal comprises at least one of a haptic feedback, an audible feedback, or a visual feedback.
21. A user interface system, comprising:
   a display;
   a sensor configured to detect an interaction, by a user, with the display;
   one or more memory devices storing instructions; and
   one or more processors configured to execute the instructions to perform operations comprising:
      determining that the interaction is a command to initiate a process to provide
      a user-specified location for a display element;
      generating the display element and positioning the display element at the
      user-specified location on the display; and
      providing a feedback signal to the user indicating the display element location.
22. The system of clause 21, wherein:
   the interaction comprises a touch of the display; and
   the operations comprise initiating the process to provide the user specified location when the touch persists for longer than a threshold period of time.
23. The system of clause 21 or 22, wherein the display element is a home key of a virtual keyboard pattern.
24. The system of clause 23, wherein:
   the virtual keyboard pattern comprises a numeric keypad; and the display element is a "5" key of the numeric keypad.
25. The system of any one of clauses 21 to 24, wherein the feedback signal comprises a haptic
   feedback.
26. The system of any one of clauses 21 to 24, wherein the feedback signal comprises an audible
   feedback.
27. The system of any one of clauses 21 to 24, wherein the feedback signal comprises a visual feedback.
28. The system of any one of clauses 21 to 27, wherein the operations comprise commanding a device external to the display to generate the feedback signal.
29. The system of any one of clauses 21 to 28, wherein:
   the display element comprises a home key of a virtual keyboard pattern;
   providing the feedback signal comprises providing a first feedback signal
   indicating a user interaction with the home key; and
   the operations further comprise providing a second feedback signal indicating a user interaction with a key of the virtual keyboard pattern other than the home key.
30. The system of clause 29, wherein the first and second feedback signals are haptic feedbacks having different haptic characteristics.
31. The system of clause 29, wherein the first and second feedback signals are audible feedbacks having different audible characteristics.
32. An apparatus, comprising:
   a display;
   a sensor configured to detect an interaction, by a user, with the display;
   one or more memory devices storing instructions; and
   one or more processors configured to execute the instructions to perform operations comprising:
   determining that the interaction is a command to initiate a process to provide a user-specified location for a display element;
   generating the display element and positioning the display element at the user-specified location on the display; and
   a feedback provider configured to provide a feedback signal to the user indicating the display element location.
33. The apparatus of clause 32, wherein:
   the interaction comprises a touch of the display; and
   the operations comprise initiating the process to provide the user-specified location for the display element when the touch persists for longer than a threshold period of time.
34. The apparatus of clause 32 or 33, wherein the display element is a home key of the virtual keyboard pattern.
35. The apparatus of any one of clauses 32 to 34, wherein feedback provider is configured to provide at least one of a haptic feedback, an audible feedback, or a visual feedback.
36. The apparatus of any one of clauses 32 to 35, wherein the operations comprise commanding a device external to the display to generate the feedback signal.
37. The apparatus of any one of clauses 32 to 36, wherein:
   the display element comprises a home key of a virtual keyboard pattern;
   the feedback provider is configured to provide a first feedback signal indicating a user interaction with the home key; and
   the feedback provider is further configured to provide a second feedback signal indicating a user interaction with a key of the virtual keyboard pattern other than the home key.
38. The apparatus of clause 37, wherein the first and second feedback signals are haptic feedbacks having different haptic characteristics.
39. The apparatus of clause 37, wherein the first and second feedback signals are audible feedbacks having different audible characteristics.
40. A method for providing user interface, comprising:
   detecting an interaction, by a user, with a display;
   determining that the interaction is a command to initiate a process to provide a user-specified location for a display element;
   generating the display element and positioning the display element at the user- specified location on the display; and
   providing a feedback signal to the user indicating the display element location.

## Claims

1. A user interface system, comprising:
a display;
a sensor configured to detect an interaction, by a user, with the display;
one or more memory devices storing instructions; and
one or more processors configured to execute the instructions to perform operations comprising:
generating a pattern on the display
determining that the interaction is a command to initiate a process to assist the user in interacting with the display;
generating a display element on the pattern at a location specified by the command; and
providing a feedback signal to the user indicating the display element location.

2. The system of claim 1, wherein:
the interaction comprises a touch of the display; and
the operations comprise initiating the process to assist the user when the touch persists for longer than a threshold period of time.

3. The system of any preceding claim, wherein:
the pattern comprises a virtual keyboard pattern; and
the display element is a home key of the virtual keyboard pattern.

4. The system of claim 3, wherein:
the virtual keyboard pattern comprises a numeric keypad; and
the display element is a "5" key of the numeric keypad.

5. The system of any preceding claim, wherein the feedback signal comprises a haptic feedback.

6. The system of any one of claims 1 to 4, wherein the feedback signal comprises an audible feedback.

7. The system of any one of claims 1 to 4, wherein the feedback signal comprises a visual feedback.

8. The system of any preceding claim, wherein the operations comprise commanding an external device to generate the feedback signal.

9. The system of any preceding claim, wherein:
the display element comprises a home key of a virtual keyboard pattern;
providing the feedback signal comprises providing a first feedback signal indicating a user interaction with the home key; and
the operations further comprise providing a second feedback signal indicating a user interaction with a key of the virtual keyboard pattern other than the home key.

10. The system of claim 9, wherein the first and second feedback signals are haptic feedbacks having different haptic characteristics.

11. The system of claim 9, wherein the first and second feedback signals are audible feedbacks having different audible characteristics.

12. A method for providing a user interface, comprising:
generating a pattern on a display;
detecting an interaction, by a user, with the display;
determining that the interaction is a command to initiate a process to assist the user in interacting with the display;
generating a display element on the pattern at a location specified by the command; and
providing a feedback signal to the user indicating the display element location.

13. The method of claim 12, wherein:
the pattern comprises a virtual keyboard pattern; and
the display element comprises a home key of the virtual keyboard pattern.

14. The method of claim 12 or 13, wherein:
the display element comprises a home key of a virtual keyboard pattern; and
providing the feedback signal comprises:
providing a first feedback signal indicating a user interaction with the home key; and
providing a second feedback signal indicating a user interaction with a key of the virtual keyboard pattern other than the home key.

15. The method of any one of claims 12 to 14, wherein the feedback signal comprises at least one of a haptic feedback, an audible feedback, or a visual feedback.
